# EUROPÄISCHE PATENTSCHRIFT

(11) **EP 2 740 521 B1**
(45) Veröffentlichungstag und Bekanntmachung des Hinweises auf die Patenterteilung: **17.05.2017**
(21) Anmeldenummer: 13193282.4
(22) Anmeldetag: 18.11.2013
(51) Int. Cl.: A63H 33/04, F16K 31/02

(54) **Ventil insbesondere für ein Spielzeugbaukastensystem**
Valve, in particular for a toy construction kit system
Soupape, notamment pour un système de jeu de construction

(30) Priorität: 07.12.2012 DE 102012222570
(43) Veröffentlichungstag der Anmeldung: 11.06.2014
(73) Patentinhaber: Actuator Solutions GmbH, 91757 Treuchtlingen (DE)
(72) Erfinder: Köpfer, Markus, 73495 Regelsweiler (DE); Beyerlein, Wolfgang, 91734 Mitteleschenbach (DE)
(74) Vertreter: Meissner Bolte Partnerschaft mbB

(56) Entgegenhaltungen:
- WO-A1-2009/047225
- DE-A1- 2 441 858
- DE-A1-102005 060 217
- DE-B3- 10 257 549
- US-B1- 6 843 465

## Beschreibung

Die Erfindung betrifft ein Ventil, insbesondere für ein Spielzeugbaukastensystem, d.h. ein Ventil, welches in einen Baustein eines Spielzeugbaukastensystems integriert ist. Ein solches Baukastensystem umfasst eine Vielzahl von miteinander verbaubaren bzw. aneinander fixierbaren Bausteinen sowie, wenn damit technische Geräte mit fluidtechnisch angetriebenen beweglichen Elementen, beispielsweise Bagger, gebaut werden können, ein Ventil, mit dem beispielsweise ein Pneumatikzylinder ansteuerbar ist. Neben handbetätigten Ventilen kommen auch solche mit einem elektromagnetischen Antrieb zum Einsatz, wobei letztere vor allem wegen der Größe von elektromagnetischen Antrieben praktisch nicht in ein mit dem Baukastensystem gebautes Gerät integriert werden können, sondern separat davon aufgestellt und mit Schläuchen mit dem Gerät verbunden werden müssen, was besonders bei fahrbaren Geräten wie Baggern nachteilig ist.

Aufgabe der Erfindung ist es, ein Ventil bereitzustellen, das einen Antrieb umfasst und welches sich mit geringem technischen Aufwand herstellen und auf einfache Weise montieren bzw. in ein Gehäuse, insbesondere den Baustein eines Spielzeugbaukastensystems, integrieren lässt.

Diese Aufgabe wird durch ein Ventil gemäß Anspruch 1 gelöst. Das Ventil umfasst ein Ventilgehäuse mit wenigstens einem zur Verbindung mit einem Baustein des Baukastensystems dienendes Fixierelement. Es ist deshalb mit Bausteinen des Baukastensystems verbaubar. Der Innenraum des Ventilgehäuses steht über wenigstens eine Öffnung mit der Umgebung in Verbindung. Zur Steuerung der Öffnung sind im Gehäuseinnenraum ein zwischen einer die Öffnung verschließenden Schließstellung und einer die Öffnung freigebenden Freigabestellung bewegliches Ventilelement sowie ein aus einer Formgedächtnislegierung bestehendes langgestrecktes Aktuator-Element angeordnet. Das Aktuator-Element betätigt das Ventilelement zum Zwecke der Freigabe oder zum Schließen der Öffnung in einer Hubrichtung, und zwar entgegen der Wirkung eines das Ventilelement in Gegenrichtung beaufschlagenden Federelements. Das Federelement bildet einen Träger, an dem das Ventilelement fixiert ist und der das Ventilelement bei seiner Bewegung zwischen der Schließ- und Freigabestellung auf einer Bewegungsbahn führt.

Vor allem aufgrund des letztgenannten Merkmals lassen sich Herstellung und Montage wesentlich einfacher gestalten, da das Ventilelement am Federelement fixiert ist, letzteres somit als Träger fungiert. So dienen beispielweise bei dem aus DE 10 2005 060 217 bekannten Ventil Gehäuse-Strukturen als Träger für ein Ventilelement, wobei dieses nach Art eines Stößels ausgebildet ist und mit seinen beiden Enden in jeweils einer Öffnung einer Gehäusewand axial geführt ist, was sowohl die Herstellung als auch die Montage erschwert. Das Federelement erfüllt außerdem eine Doppelfunktion, indem es einerseits die Beaufschlagung des Ventilelements mit einer entgegen der Hubrichtung H gerichteten Kraft F bewirkt und andererseits das Ventilelement bei seiner Bewegung zwischen der Schließ- und Freigabestellung auf einer Bewegungsbahn führt.

Außerdem benötigt ein Ventil der beanspruchten Art nur ein relativ geringes Bauvolumen, wobei es robust ist und zuverlässig arbeitet, sich aber in einem Gehäuse unterbringen lässt, das im Wesentlichen die gleiche Größe hat wie ein Baustein des Systems.

Die Erfindung wird nun unter Bezugnahme auf die beigefügten Zeichnungen näher erläutert: Es zeigen jeweils in perspektivischer Darstellung:
- Fig. 1: ein Ventil mit einem Fixierelemente aufweisenden Ventilgehäuse,

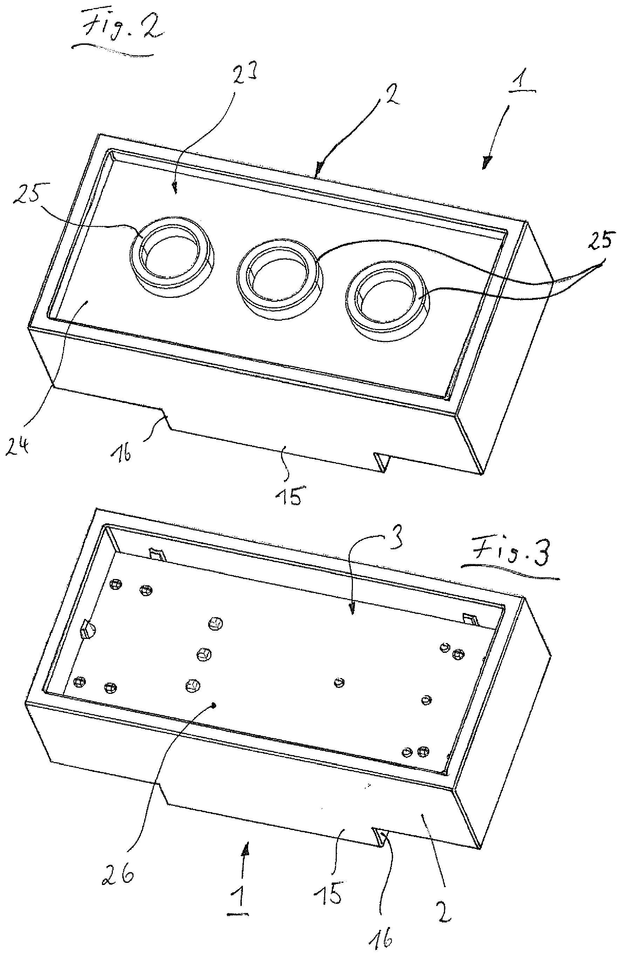

- Fig. 2: eine Draufsicht auf die Unterseite des Ventilgehäuses, welche von einer Bodenplatte verschlossen ist,
- Fig. 3: eine Fig. 2 entsprechende Ansicht des Gehäuses, bei dem jedoch die Bodenplatte entfernt worden ist, so dass die Sicht auf eine Grundplatte, an welcher Ventileinbauten fixiert sind, frei wird,
- Fig. 4: eine Draufsicht auf das Ventilgehäuse, aus dem die Grundplatte mit den sich darauf befindlichen Ventileinbauten herausgenommen ist,
- Fig. 5: eine Grundplatte, auf der sämtliche Ventileinbauten angeordnet sind,

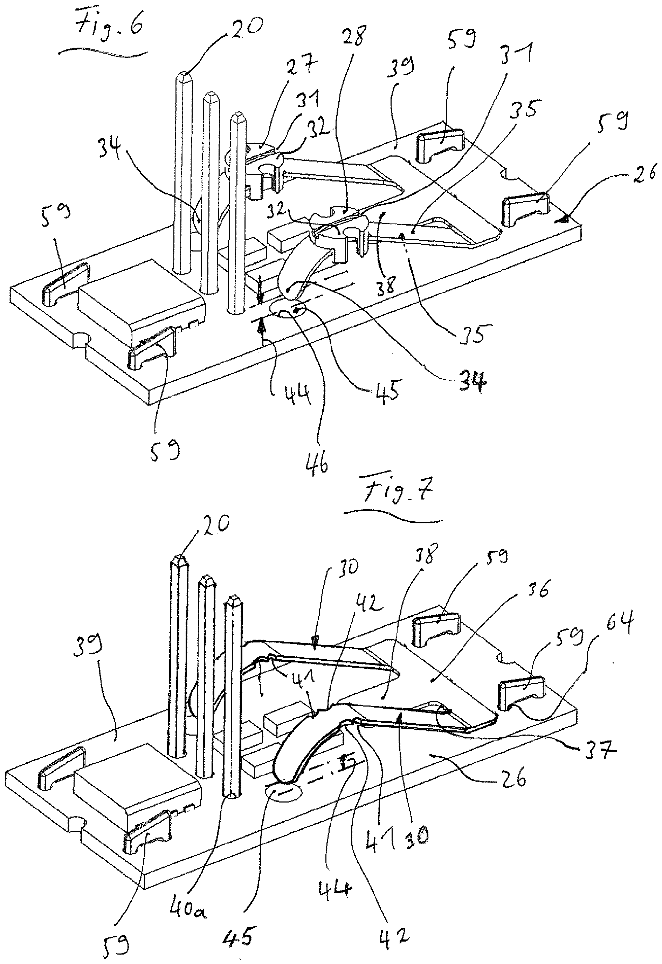

- Fig. 6: eine Grundplatte, von der ein Teil der Ventileinbauten entfernt worden ist,
- Fig. 7: eine Grundplatte, von der weitere Ventileinbauten entfernt worden sind,
- Fig. 8: das Detail VIII in Fig. 5, welches einen Ausschnitt eines Federelements zeigt, an dem ein Basiselement, ein Ventilelement und ein Aktuator-Element fixiert sind,
- Fig. 9: das Ventilelement aus Fig. 8,
- Fig. 10: das Basiselement aus Fig. 8,
- Fig. 11: das Federelement von Fig. 8,
- Fig. 12: eine Grundplatte, von der sämtliche, die Ventilfunktion gewährleistenden Einbauten entfernt sind,
- Fig. 13: A und B zur Fixierung eines Aktuatorelements an der Grundplatte dienende Crimp-Elemente,
- Fig. 14: eine Darstellung, welche den Zusammenbau eines Ventils mit Bausteinen eines Baukastensystems verdeutlicht.

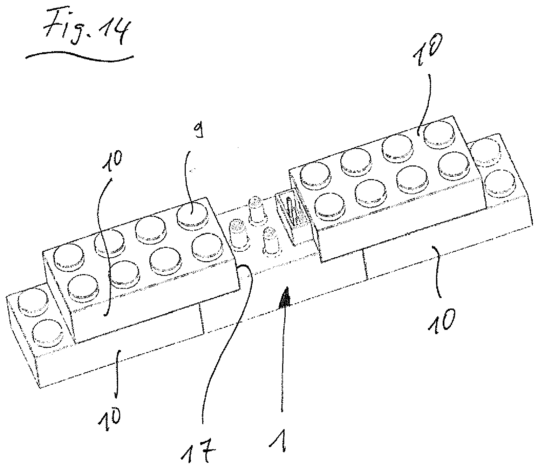

Ein erfindungsgemäßes Ventil 1 umfasst ein Ventilgehäuse 2, dessen Innenraum 3 über zwei steuerbare Öffnungen mit der Umgebung in Verbindung steht. Das Ventil ist beispielweise als 3/3-Wegeventil ausgestaltet, wobei eine steuerbare Öffnung eine zur Zuführung von Druckluft in den Innenraum 3 dienende Einlassöffnung 4 und die andere steuerbare Öffnung eine zum Ablassen von Druckluft in die Umgebung dienende Auslassöffnung 5 ist. Weiterhin steht der Innenraum 3 über eine nicht steuerbare Öffnung 6 mit der Umgebung in Verbindung. Diese Öffnung kann mit einem druckluftbetriebenen Element des Baukastensystems, beispielsweise mit einem Pneumatikzylinder (nicht dargestellt) verbunden werden. Die Öffnungen 4 bis 6 setzen sich in außenseitig am Ventilgehäuse 2 angeformte Anschlussstutzen 4a, 5a, 6a fort, welche aus einem ersten Flächenbereich 7 des Gehäuses vorstehen. Der genannte Flächenbereich ist von zwei zweiten Flächenbereichen 8 flankiert. Am Ventilgehäuse 2 sind weiterhin Fixierelemente 9 angeformt, die zur Verbindung des Ventils 1 bzw. des Ventilgehäuses 2 mit Bausteinen 10 (Fig. 14) des Baukastensystems dienen. Die Fixierelemente 9, die beispielsweise als scheibenförmige Noppen ausgebildet sind, stehen paarweise aus den zweiten Flächenbereichen 8, die vorzugsweise in einer gemeinsamen Ebene 13 verlaufen, vor. Der erste Flächenbereich 7, der vorzugsweise ebenfalls ebenflächig ausgestaltet ist, also in einer Ebene 14 verläuft, ist bei einer bevorzugten Ausgestaltungsvariante von der Oberseite eines über die zweiten Flächenbereiche 8 hinausragenden Vorsprungs 15 gebildet. Die parallel zueinander verlaufenden und zu den zweiten Flächenbereichen 8 weisenden Seitenflächen 16 bilden eine Anschlagfläche, an welcher ein mit dem Ventilgehäuse 2 mit Hilfe der Fixierelemente 9 fixierter Baustein 10 mit einer Stirnseite 17 anliegt.

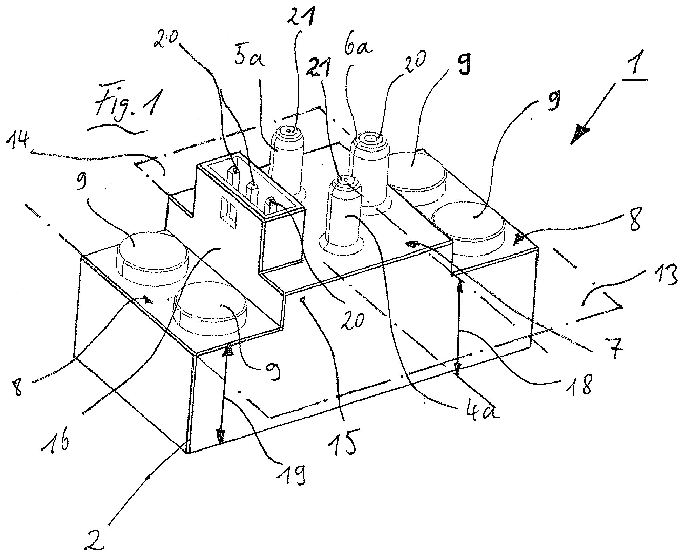

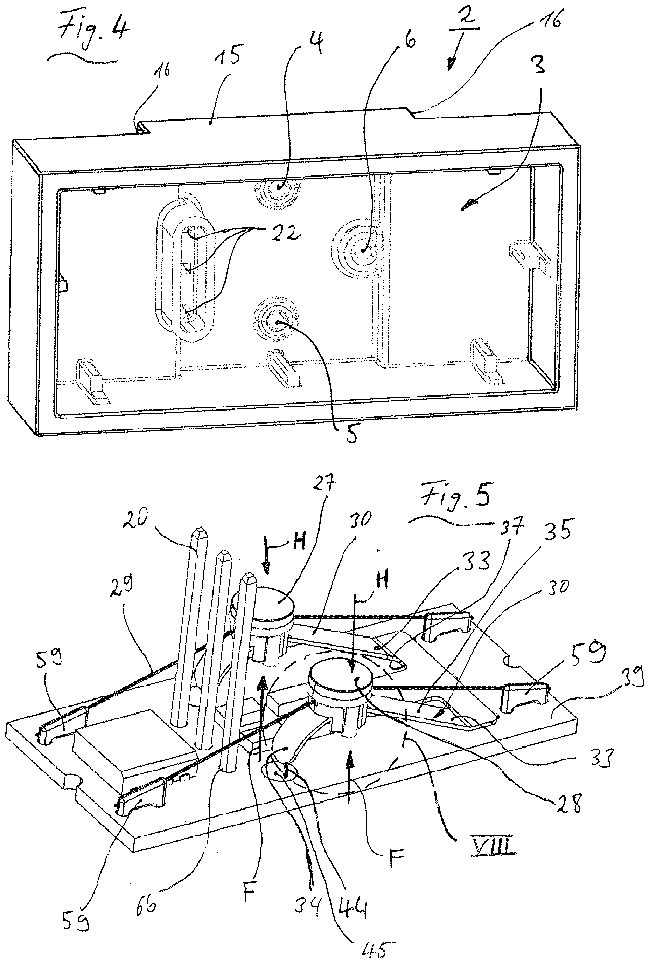

Der Abstand 18 (Fig. 1) zwischen den Enden 21 der Anschlussstutzen 4a, 5a, 6a und den zweiten Flächenbereichen 8 ist geringer als die Höhe 19 des Gehäuses 2 im Bereich der zweiten Flächenbereiche 8. Aus dem ersten Flächenbereich 7 stehen neben den Anschlussstutzen 4a, 5a, 6a elektrische Kontaktstifte 20 vor, wobei diese über Bohrungen 22 (Fig. 4) in der Gehäusewand hindurch geführt und vorzugsweise so bemessen sind, dass sie die genannten Anschlussstutzen nicht überragen.

Das Ventilgehäuse 2 ist an seiner Unterseite 23 von einer Bodenplatte 24 druckdicht verschlossen. Aus der Bodenplatte 24 stehen Gegen-Fixierelemente 25 vor, die mit Fixierelementen 9 eines Bausteins 10 unter Ausbildung einer Klemmverbindung zusammenwirken. Die im Innenraum 3 des Gehäuses 2 vorhandenen Ventileinbauten bzw. Funktionsbauteile sind an einer Gehäusestruktur, vorzugsweise an einer Grundplatte 26, mittel- oder unmittelbar fixiert. Die Grundplatte liegt an den Stirnseiten von Rippen 11 an, welche an der Innenwandung des Ventilgehäuses 2 angeformt sind. Die Funktionsbauteile umfassen zwei Ventilelemente 27, 28, welche die Einlassöffnung 4 bzw. die Auslassöffnung 5 steuern, und zwei langstreckte, aus einer Formgedächtnislegierung wie z.B. TiNi bestehende, beispielweise drahtförmig ausgebildete Aktuator-Elemente 29, welche die Ventilelemente 27, 28 in einer Hubrichtung H betätigen. Diese Betätigung erfolgt entgegen der Wirkung eines Federelements 30, welches die Ventilelemente 27, 28 in einer der Hubrichtung H entgegengesetzten Richtung mit einer Federkraft F beaufschlagen.

Die Ventilelemente 27, 28 bewegen sich zwischen der Freigabe- und Schließstellung auf einer vorgegebenen Bewegungsbahn. Für die dazu erforderliche Zwangsführung der Ventilelemente wäre es denkbar, diese oder einen sie haltenden Träger an einer Gehäusestruktur zu führen, etwa indem Durchbrechungen in Gehäusewänden vorgesehen sind, welche von einem als Stößel ausgebildeten Ventilelement oder einem das Ventilelement tragenden Träger beweglich durchsetzt sind. Neben einem erhöhten Montageaufwand würde eine solche Ausgestaltung hohe Anforderungen an die Toleranzen der aneinander geführten Teile erfordern.

Wesentlich einfacher gestalten sich Herstellung und Montage, wenn die Ventilelemente 27, 28 jeweils am Federelement 30 fixiert sind, diese somit als Träger fungiert. Das Federelement 30 erfüllt dabei eine Doppelfunktion, indem es einerseits die Beaufschlagung eines Ventilelements 27, 28 mit einer entgegen der Hubrichtung H gerichteten Kraft F bewirkt und andererseits das Ventilelement bei seiner Bewegung zwischen der Schließ- und Freigabestellung auf einer Bewegungsbahn führt. Besonders geeignet für eine solche Doppelfunktion ist ein langgestrecktes Federelement 30, dessen eines Ende 33 mittel- oder unmittelbar am Ventilgehäuse 2 fixiert ist, wohingegen sein anderes Ende nicht am Ventilgehäuse oder einer sonstigen ortsfesten Gehäusestruktur fixiert ist, sondern frei in den Innenraum 3 des Ventilgehäuses 2 hinein steht, somit ein Freiende (34) bildet. Das Federelement 30 wirkt aufgrund dieser Ausgestaltung wie ein einarmiger Hebel, dessen Drehpunkt im Bereich des fixierten Endes 33 verläuft. Die an den Federelementen 30 fixierten Ventilelemente 27, 28 führen daher zwischen ihrer Schließstellung und ihrer Freigabestellung eine bogenförmige Bewegung aus. Dies ist aus Vereinfachungsgründen bei dem geradlinig gezeichneten Pfeil für die Hubrichtung H (Fig. 5) nicht berücksichtigt.

Ein seitliche, sich quer zur Hubrichtung H erstreckende Bewegungskomponente der Ventilelement 27, 28, kann auf einfache Weise verhindert werden, wenn die Federelemente 30 jeweils als Blattfeder ausgebildet sind, wobei sich deren Breitseiten 35 quer zur Hubrichtung H erstrecken. Die nicht freien Enden 33 der Federelemente sind über einen quer zur Hubrichtung H bzw. zu einer diese enthaltenden Ebene verlaufenden, vorzugsweise plattenförmigen Steg 36 miteinander verbunden. Von einer mittleren Position der zu den Freienden 34 weisenden Vorderkante 37 des Stegs 36 erstreckt sich ein Stützelement 38, das beispielsweise plattenförmig ausgebildet ist, weg. Der Steg 36 und das Stützelement 38 liegen an einer Gehäusestruktur, vorzugsweise an der Oberseite 39 der Grundplatte 26 an, wobei unterseitig aus ihnen vorstehende, beispielsweise stiftförmige Steckelemente 40, in Bohrungen 40a der Grundplatte 26 hineinragen und darin fixiert sind.

In einer weiteren bevorzugten Ausgestaltung weist das Federelement 30 eine weitere Funktion auf, indem es Teil eines Schalters ist, welcher auf eine bestimmte Verfahrposition in Hubrichtung H eines Ventilelements 27, 28 anspricht. Das Federelement 30 besteht aus einem elektrisch leitenden Material wie einem Metall oder einer Metalllegierung. Dem Freiende 34 des Federelements gegenüberliegend mit Abstand 44 (Fig. 5) in Hubrichtung H ist ein elektrisches Kontaktelement 45 ortsfest an einer Gehäusestruktur, vorzugsweise der Ventilplatte 26, angeordnet. Das elektrische Kontaktelement 45 ist beispielsweise eine Platte aus elektrisch leitendem Material, welche in einer Ausnehmung 46 in der Oberseite 39 der Ventilplatte 26 angeordnet ist. Das Federelement 30 und das Kontaktelement 46 sind Teile eines Stromkreises, wobei dieser, wenn das Freiende 34 das Kontaktelement 45 berührt, geschlossen ist. Die geschilderte Anordnung kann beispielsweise als Überlastungsschutz für die Aktuator-Elemente 29 genutzt werden.

Die Ventilelemente 27, 28 stützen sich auf einem an den Federelement 30 fixierten Basiselement 46 ab. Das vorzugsweise drahtförmig ausgestaltete Aktuator-Element 29 erstreckt sich mit einem mittlerem Abschnitt zwischen Basiselement 46 und Ventilelement 27, 28 hindurch, und ist auf diese Weise an den genannten Elementen fixiert. Die Fixierung kann noch dadurch verbessert werden, wenn der mittlere Abschnitt des Aktuator-Elements 29 in einer Nut 31 einliegt. Die Nut 31 ist beispielsweise in der gegen die Hubrichtung H weisenden Oberseite 32 des Basiselements 46 vorhanden.

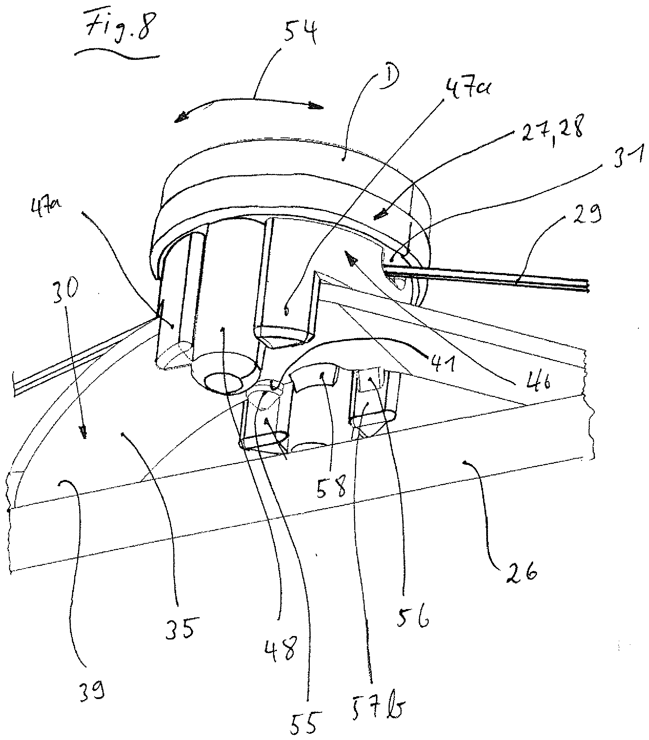

Das Basiselement 46 ist an dem Federelement 30 mit einem in dessen Längserstreckung und entgegen der Hubrichtung H wirksamen Formschluss fixiert. An der gegen die Hubrichtung H weisenden Oberseite des im Wesentlichen scheibenförmig ausgebildeten Ventilelements 27, 28 ist ein mit einer Einlassöffnung 4 beziehungsweise Auslassöffnung 5 zusammenwirkendes Dichtelement D (Fig. 8) angeordnet. Das Aktuator-Element 29, welches vorzugsweise drahtförmig ausgestaltet ist, erstreckt sich mit einem mittleren Längsabschnitt zwischen dem Basiselement 46 und dem Ventilelement 27, 28 hindurch. Basiselement 46 und Ventilelement 27, 28 umgrenzen eine den genannten Längsabschnitt des Aktuator-Elements 29 aufnehmende Nut 31, welche vorzugsweise in der entgegen die Hubrichtung H weisenden Oberseite 32 des Basiselements vorhanden ist.

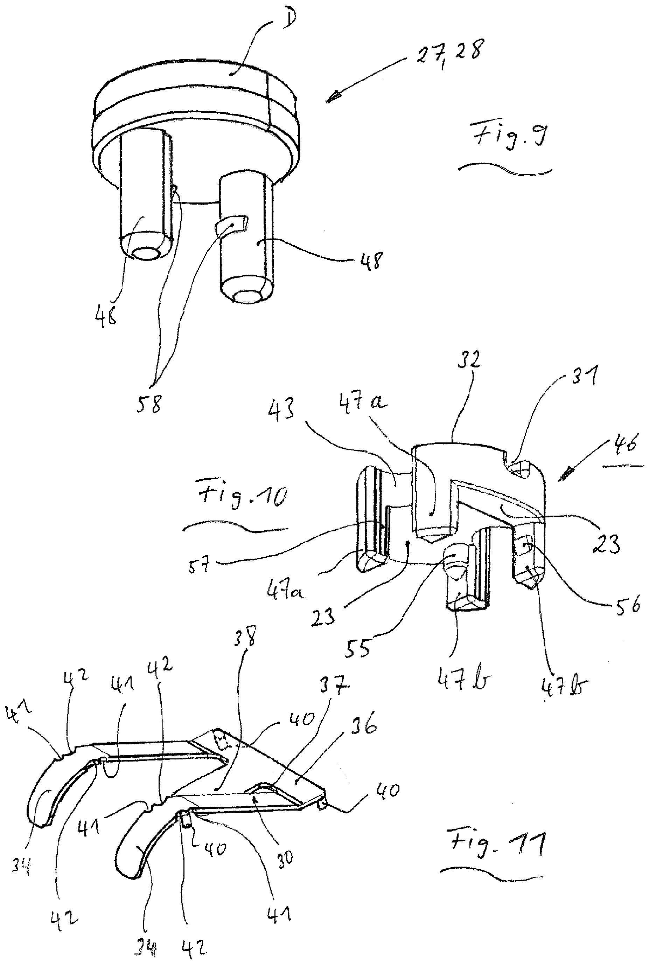

Aus der in Hubrichtung H weisenden Unterseite 23 (Fig. 10) des Basiselements 46 stehen zwei Paare von Vorsprüngen 47a/47a, 47b/47b vor, wobei die Vorsprung-Paare einen Längsabschnitt des Federelements 30 zwischen sich einschließen (siehe insbesondere Fig.8). Auf diese Weise ist eine Drehfixierung des Ventilelements 27, 28 in Richtung des Doppelpfeiles 54 gewährleistet. Eine in Richtung der Längserstreckung des Federelements 30 wirksame Fixierung des Basiselements 46 am Federelement 30 dadurch erreicht, dass aus der dem Aktuator-Element 29 zugewandten Innenseite eines Vorsprungs eines Vorsprungpaares 47a/47a und 47b/47b eine Rastnase 55 in einer quer zur Hubrichtung H verlaufenden Richtung vorsteht, welche in eine Rastausnehmung 41 an dem vorzugsweise blattfederförmigen Federelement 30 eingreift. An der entsprechenden Seite des jeweils anderen Vorsprungs eines Vorsprung-Paares 47a/47a, 47b/47b ist ein erhaben vorstehendes Hintergriffselement 56 angeformt, welches die in Hubrichtung H weisende Seite, bei einem als Blattfeder ausgestalteten Federelement 30 also dessen in die genannte Richtung weisende Breitseite 35 hintergreift. Das Basiselement 46 ist auf diese Weise auch mit einem entgegen der Hubrichtung H weisenden Formschluss am Federelement 30 gehalten.

Das Ventilelement 27, 28 und das Basiselement 46 sind mit Hilfe einer Steckverbindung aneinander fixiert. Zu diesem Zwecke stehen aus der dem Federelement 30 zugewandten Seite des Ventilelements 27, 28 zwei Steckzapfen 48 vor, welche in einer quer zur Längserstreckung des Federelements 30 verlaufenden Richtung beabstandet sind und in komplementär gestaltete Ausnehmungen 43 des Basiselements 46 hinein ragen. Die Vorsprünge der Vorsprungpaare 47a/47a, 47b/47b sind dabei so gestaltet und beabstandet, dass sie mit Anlageflächen 57 (fig. 10) an der Umfangsfläche der Steckzapfen 48 anliegen. Die vorzugsweise kreiszylinderförmigen Steckzapfen 48 greifen unter Ausbildung eines in der Längserstreckung des Federelements 30 wirksamen Formschlusses in eine Rastausnehmung 42 am Federelement 30 ein. Zur Ausbildung eines entgegen der Hubrichtung H wirksamen Formschlusses hintergreift ein an den Steckzapfen 48 vorhandenes Hintergriffselement 58 die in Hubrichtung H weisende Seite bzw. die untere Breitseite 35 eines als Blattfeder ausgestalteten Federelements 30 im Randbereich der Ausnehmung 42.

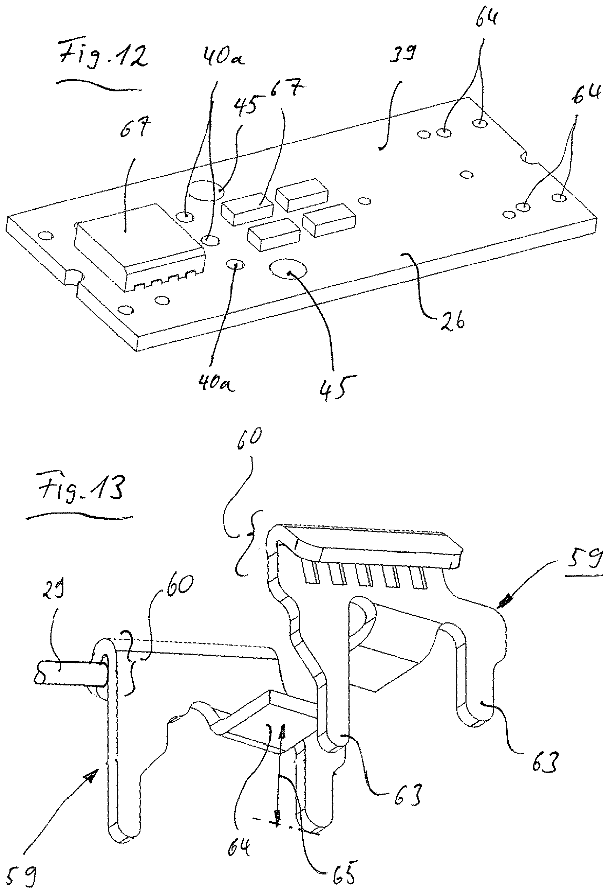

An den Enden des Aktuator-Elements 29 ist jeweils ein Crimp-Element 59 fixiert, das in Fig.13 aus zwei unterschiedlichen Blickrichtungen gezeigt ist. Das Crimp-Element 59 weist einen Klemmbereich 60 auf, welcher das Ende des Aktuator-Elements 29 festklemmt (Fig.13). Das als Blech-Stanzteil ausgestaltete Crimp-Element 59 umfasst zwei in der Längserstreckung des Aktuator-Elements 29 beabstandete Steckzungen 53, welche in Bohrungen 64 in einer Gehäusestruktur, insbesondere in der Grundplatte 26 hineinragen und darin fixiert sind. Von einem sich zwischen den Steckzungen 63 erstreckenden Bereich der Crimp-Elemente 59 steht in einer rechtwinklig zu den Steckzungen 63 verlaufenden Richtung ein laschenförmiges Anschlagelement 64 ab, dessen in Hubrichtung H weisende Unterseite von den Enden der Steckzungen 63 um eine Strecke beabstandet ist, welche der Einstecktiefe 65, mit welchem die Steckzungen in die Bohrungen 64 eingesteckt werden, entspricht.

Neben den oben beschriebenen Bauteilen beziehungsweise Elementen sind an einer Gehäusestruktur des Ventilgehäuses 2, insbesondere an der Grundplatte 26 die oben bereits erwähnten elektrischen Kontaktstifte 20 fixiert, in dem deren in Hubrichtung H weisende Enden in Bohrungen 66 insbesondere in der Grundplatte 26 eingesteckt sind.

Zur Steuerung des Ventils sind elektrische und/oder elektronische Bauteile 67 vorhanden, die an der Gehäusestruktur beziehungsweise an der Ventilplatte 26 fixiert sind.

## Patentansprüche

1. Ventil für ein Spielzeug-Baukastensystem, umfassend ein Ventilgehäuse (2) mit wenigstens einem zur Verbindung mit einem Baustein (10) des Baukastensystems dienendes Fixierelement (9), dessen Innenraum (3) über wenigstens eine steuerbare Öffnung mit der Umgebung in Verbindung steht, wobei im Innenraum ein zwischen einer die Öffnung verschließenden Schließstellung und einer die Öffnung freigebenden Freigabestellung bewegliches Ventilelement (27, 28), ein langgestrecktes, aus einer Formgedächtnislegierung bestehendes Aktuator-Element (29) und ein Federelement (30) angeordnet sind, und wobei das Aktuator-Element das Ventilelement in einer Hubrichtung (H) betätigt und das Federelement das Ventilelement in einer der Hubrichtung entgegengesetzten Richtung mit einer Federkraft (F) beaufschlagt, **dadurch gekennzeichnet, dass** das Federelement (30) einen Träger bildet, an dem das Ventilelement (27, 28) fixiert ist und der das Ventilelement (27, 28) bei seiner Bewegung zwischen der Schließ- und Freigabestellung auf einer Bewegungsbahn führt.

2. Ventil nach Anspruch 1, **gekennzeichnet durch** ein langgestrecktes Federelement (30), dessen eines Ende (33) an einer Gehäusestruktur des Ventilgehäuses (2) fixiert ist, wobei das andere Ende ein Freiende (34) ist.

3. Ventil nach Anspruch 2, **dadurch gekennzeichnet, dass** das Federelement (30) eine Blattfeder ist, deren Breitseiten (35) in bzw. gegen die Hubrichtung (H) weisen.

4. Ventil nach Anspruch 2 oder 3, **dadurch gekennzeichnet, dass** das Federelement (30) aus einem elektrisch leitenden Material besteht und dass dem Freiende (34) mit Abstand (44) in Hubrichtung (H) gegenüberliegend ein elektrisches Kontaktelement 45 ortsfest an einer Gehäusestruktur angeordnet ist.

5. Ventil nach einem der vorhergehenden Ansprüche, **dadurch gekennzeichnet, dass** sich das Ventilelement (27, 28) auf einem an dem Federelement (30) fixierten Basiselement (46) abstützt, wobei das Aktuator-Element (29) drahtförmig ausgestaltet ist und sich mit einem mittleren Längsabschnitt zwischen dem Basiselement (46) und dem Ventilelement (27, 28) hindurch erstreckt.

6. Ventil nach Anspruch 5, **dadurch gekennzeichnet, dass** das Basiselement (46) an dem Federelement (30) mit einem in dessen Längserstreckung und entgegen der Hubrichtung H wirksamen Formschluss fixiert ist.

7. Ventil nach Anspruch 6, **dadurch gekennzeichnet, dass** aus der in Hubrichtung (H) weisenden Unterseite (23) des Basiselements (46) wenigstens zwei einen Längsabschnitt des Federelement (30) zwischen sich einschließende und dessen in Hubrichtung H weisende Seite hintergreifende Vorsprünge (47) vorstehen.

8. Ventil nach einem der Ansprüche 5 bis 7, **dadurch gekennzeichnet, dass** das Ventilelement (27, 28) und das Basiselement (46) mit Hilfe einer Steckverbindung aneinander fixiert sind.

9. Ventil nach Anspruch 8, **dadurch gekennzeichnet, dass** aus der dem Federelement (30) zugwandten Seite des Ventilelements (27, 28) wenigstens zwei Steckzapfen (48) vorstehen, welche einen Längsabschnitt des Federelements (30) zwischen sich und in eine komplementär gestaltete Ausnehmung (49) im Basiselement (46) hineinragen.

10. Ventil nach Anspruch 9, **dadurch gekennzeichnet, dass** die Steckzapfen (48) das Federelement (30) auf seiner in Hubrichtung H weisende Seite hintergreifen.

11. Ventil nach einem der vorhergehenden Ansprüche, **dadurch gekennzeichnet, dass** die Gehäusestruktur eine im Innenraum (3) des Ventilgehäuses (2) angeordnete Grundplatte (26) ist.

12. Ventil nach einem der vorhergehenden Ansprüche, **dadurch gekennzeichnet, dass** das Ventilgehäuse (2) wenigstens einen mit der Einlassöffnung (4) oder der Auslassöffnung (5) in Verbindung stehenden Anschluss-Stutzen (4a, 5a) umfasst, wobei dieser aus einem ersten Flächenbereich (7) des Ventilgehäuses (2) vorsteht, und wobei der erste Flächenbereich von zwei zweiten Flächenbereichen (8) flankiert ist, aus welchen zur Fixierung eines Bausteins (10) dienende Fixierelemente (9) vorstehen.

13. Ventil nach Anspruch 12, **dadurch gekennzeichnet, dass** zumindest die zweiten Flächenbereiche (8) in einer gemeinsamen Ebene (13) verlaufen.

14. Ventil nach Anspruch 12 oder 13, **dadurch gekennzeichnet, dass** der erste Flächenbereich (7) von der Oberseite eines über die zweiten Flächenbereiche (8) hinaus ragenden Vorsprungs (15) gebildet ist.

15. Ventil nach einem der Ansprüche 12 bis 14, **dadurch gekennzeichnet, dass** aus dem ersten Flächenbereich (7) elektrische Kontaktstifte (20) vorstehen.

16. Ventil nach Anspruch 15, **dadurch gekennzeichnet, dass** die Kontaktstifte (20) den wenigstens einen Anschluss-Stutzen (4a, 5a) nicht überragen.

17. Spielzeug-Baukastensystem, umfassend ein Ventil (1) nach einem der vorhergehenden Ansprüche.

## Claims

1. Valve for a toy construction kit system, comprising a valve housing (2) having at least one fixing element (9) serving for connection to a brick (10) of the construction kit system, the internal space (3) of said fixing element (9) being connected to the surroundings via at least one controllable opening, wherein a valve element (27, 28) that is able to be moved between a closed position sealing the opening and a release position releasing the opening, an elongated actuator element (29) consisting of a shape memory alloy, and a spring element (30) are arranged in the internal space, and wherein the actuator element activates the valve element in a lifting direction (H) and the spring element loads the valve element with a spring force (F) in a direction opposing the lifting direction, **characterised in that** the spring element (30) forms a carrier on which the valve element (27, 28) is fixed and which guides the valve element (27, 28) in its movement between the closed and release position on a movement track.

2. Valve according to claim 1, **characterised by** an elongated spring element (30), one end (33) of which being fixed on a housing structure of the valve housing (2), wherein the other end is a free end (34).

3. Valve according to claim 2, **characterised in that** the spring element (30) is a flat spring, the broadsides (35) of which point in or against the lifting direction (H).

4. Valve according to claim 2 or 3, **characterised in that** the spring element (30) consists of an electrically conductive material and, opposite the free end (34) at a distance (44) in the lifting direction (H), an electric contact element (45) is fixedly arranged on a housing structure.

5. Valve according to one of the preceding claims, **characterised in that** the valve element (27, 28) is supported on a base element (46) fixed on the spring element (30), wherein the actuator element (29) is formed in the shape of a wire and extends through between the base element (46) and the valve element (27, 28) with a central longitudinal section.

6. Valve according to claim 5, **characterised in that** the base element (46) is fixed on the spring element (30) by positive locking that is effective in the longitudinal extension of said spring element (30) and against the lifting direction (H).

7. Valve according to claim 6, **characterised in that** at least two projections (47) enclosing a longitudinal section of the spring element (30) between them and engaging behind its side pointing in the lifting direction (H) protrude out of the underside (23) of the base element (46) pointing in the lifting direction (H).

8. Valve according to one of claims 5 to 7, **characterised in that** the valve element (27, 28) and the base element (46) are fixed to each other by means of a plug connection.

9. Valve according to claim 8, **characterised in that** at least two plug-in pins (48) protrude out of the side of the valve element (27, 28) facing towards the spring element (30), said plug-in pins (48) extending into a longitudinal section of the spring element (30) between them and into a complementarily formed recess (49) in the base element (46).

10. Valve according to claim 9, **characterised in that** the plug-in pegs (48) engage behind the spring element (30) on its side pointing in the lifting direction (H).

11. Valve according to one of the preceding claims, **characterised in that** the housing structure is a base plate (26) arranged in the internal space (3) of the valve housing (2).

12. Valve according to one of the preceding claims, **characterised in that** the valve housing (2) comprises at least one connection nozzle (4a, 5a) connected to the inlet opening (4) or the outlet opening (5), wherein this protrudes out of a first surface region (7) of the valve housing (2), and wherein the first surface region is flanked by two second surface regions (8), out of which fixing elements (9) serving to fix a brick (10) protrude.

13. Valve according to claim 12, **characterised in that** at least the second surface regions (8) run on a common plane (13).

14. Valve according to claim 12 or 13, **characterised in that** the first surface region (7) is formed from the upper side of a projection (15) projecting beyond the second surface regions (8).

15. Valve according to one of claims 12 to 14, **characterised in that** electric contact pins (20) protrude out of the first surface region (7).

16. Valve according to claim 15, **characterised in that** the contact pins (20) do not extend beyond the at least one connection nozzle (4a, 5a).

17. Toy construction kit system, comprising a valve (1) according to one of the preceding claims.

## Revendications

1. Soupape pour un système de jeu de construction, comprenant un corps (2) de soupape ayant au moins un élément (9) d'immobilisation, qui sert à la liaison avec un module (10) du système de jeu de construction et dont l'espace (3) intérieur est en communication avec l'atmosphère ambiante par au moins une ouverture pouvant être commandée, dans laquelle il est monté, dans l'espace intérieur, un élément (27, 28) formant soupape, mobile entre une position de fermeture fermant l'ouverture et une position de dégagement dégageant l'ouverture, un élément (29) formant actionneur, s'étendant en longueur et en un alliage à mémoire de forme, et un élément (30) formant ressort et dans laquelle l'élément formant actionneur actionne l'élément formant soupape dans un sens (H) de levage et l'élément formant ressort applique à l'élément formant soupape une force (F) de ressort dans un sens contraire au sens de levage, **caractérisée en ce que** l'élément (30) formant ressort forme un support, sur lequel l'élément (27, 28) formant soupape est immobilisé et qui guide l'élément (27, 28) formant soupape sur un trajet de déplacement lors de son déplacement entre la position de fermeture et la position de dégagement.

2. Soupape suivant la revendication 1, **caractérisée par** un élément (30) formant ressort s'étendant en longueur, dont une extrémité (33) est immobilisée sur une structure du corps (2) de soupape, l'autre extrémité étant une extrémité (34) libre.

3. Soupape suivant la revendication 2, **caractérisée en ce que** l'élément (30) formant ressort est un ressort à lame, dont les grands côtés (35) sont tournés dans ou à l'encontre du sens (H) de levage.

4. Soupape suivant la revendication 2 ou 3, **caractérisée en ce que** l'élément (30) formant ressort est en un matériau conducteur de l'électricité et **en ce que**, en face de l'extrémité (34) libre à distance (44) dans le sens (H) de levage, un élément (45) de contact électrique est monté à poste fixe sur une structure de corps.

5. Soupape suivant l'une des revendications précédentes, **caractérisée en ce que** l'élément (27, 28) formant soupape s'appuie sur un élément (46) de base immobilisé sur l'élément (30) formant ressort, l'élément (29) formant actionneur étant conformé en forme de fil métallique et s'étendant par un tronçon longitudinal médian entre l'élément (46) de base et l'élément (27, 28) formant soupape.

6. Soupape suivant la revendication 5, **caractérisée en ce que** l'élément (46) de base est immobilisé sur l'élément (30) formant ressort par une complémentarité de forme efficace dans son étendue longitudinale et dans le sens contraire au sens (H) de levage.

7. Soupape suivant la revendication 6, **caractérisée en ce que**, du côté (23) inférieur, tourné vers le sens (H) de levage, de l'élément (46) de base, dépassent au moins deux saillies (47) incluant entre elles un tronçon longitudinal de l'élément (30) formant ressort et accrochant son côté tourné vers le sens (H) de levage.

8. Soupape suivant l'une des revendications 5 à 7, **caractérisée en ce que** l'élément (27, 28) formant soupape et l'élément (46) de base sont immobilisés l'un à l'autre à l'aide d'une liaison par enfichage.

9. Soupape suivant la revendication 8, **caractérisée en ce que**, du côté, tourné vers l'élément (8) formant ressort, de l'élément (27, 28) formant soupape, font saillie au moins deux embouts (48) d'enfichage, qui incluent entre eux un tronçon longitudinal de l'élément (30) formant ressort et pénètrent dans un évidement (49), conformé de manière complémentaire, de l'élément (46) de base.

10. Soupape suivant la revendication 9, **caractérisée en ce que** les embouts (48) d'enfichage s'accrochent à l'élément (30) formant ressort sur son côté tourné vers le sens (H) de levage.

11. Soupape suivant l'une des revendications précédentes, **caractérisée en ce que** la structure de corps est un plateau (26) de base disposé dans l'espace (3) intérieur du corps (2) de soupape.

12. Soupape suivant l'une des revendications précédentes, **caractérisée en ce que** le corps (2) de soupape comprend au moins une tubulure (4a, 5a) de raccordement en liaison avec l'ouverture (4) d'entrée ou avec l'ouverture (5) de sortie, cette tubulure faisant saillie d'une première partie (7) de surface du corps (2) de soupape, la première partie de surface étant flanquée de deux deuxièmes parties (8) de surface, dont font saillie des éléments (9) d'immobilisation servant à immobiliser un module (10).

13. Soupape suivant la revendication 12, **caractérisée en ce qu'**au moins les deuxièmes parties (8) de surface s'étendent dans un plan (13) commun.

14. Soupape suivant la revendication 12 ou 13, **caractérisée en ce que** la première partie (7) de surface est formée, du côté supérieur, d'une saillie (15) dépassant des deuxièmes parties (8) de surface.

15. Soupape suivant l'une des revendications 12 à 14, **caractérisée en ce que** des broches (20) de contact électrique font saillie de la première partie (7) de surface.

16. Soupape suivant la revendication 15, **caractérisée en ce que** les broches (20) de contact ne dépassent pas la au moins tubulure (4a, 5a) de raccord.

17. Système de jeu de construction, comprenant une soupape (1) suivant l'une des revendications précédentes.
